# EUROPÄISCHE PATENTANMELDUNG

(11) **EP 3 378 768 A1**
(43) Veröffentlichungstag der Anmeldung: **26.09.2018**
(21) Anmeldenummer: 18161486.8
(22) Anmeldetag: 13.03.2018
(51) Int. Cl.: B64C 39/02

(54) **FLUGGERÄT, FUNKNETZWERK UND VERFAHREN ZUR ÜBERTRAGUNG VON INFORMATIONEN**

(30) Priorität: 20.03.2017 DE 102017105956
(71) Anmelder: RIEDEL Communications International GmbH, 42109 Wuppertal (DE)
(72) Erfinder: Riedel, Thomas, 42109 Wuppertal (DE)
(74) Vertreter: Roche, von Westernhagen & Ehresmann

(57) **Zusammenfassung**

Die Erfindung betriff unter anderem ein Fluggerät (10), umfassend wenigstens einen elektromotorischen Antrieb (11a, 11b) und eine Steuerung (12), mit der das Fluggerät eine eingestellte Flugposition dauerhaft bewahren kann, wobei das Fluggerät über eine Kabelanordnung (16) mit einer Bodenstation (19) verbindbar ist, und wobei die Kabelanordnung wenigstens zwei elektrische Leiter (17a, 17b) zur Bereitstellung einer Spannungsversorgung für den Antrieb umfasst, sowie ein Glasfaserkabel (18) zur Übermittlung von Daten und/oder Signalen.

## Beschreibung

Die Erfindung betrifft zunächst ein Fluggerät nach Anspruch 1.

Fluggeräte der gattungsgemäßen Art sind bekannt, und zunehmend weit verbreitet. Die gattungsgemäßen Fluggeräte werden herkömmlich auch als Drohnen bezeichnet. Sie umfassen eine Tragestruktur oder einen Tragkörper, auf dem eine Batterie, oder allgemein ein Akku, angeordnet ist, der dem Antrieb wenigstens eines Elektromotors dient. In der Regel sind mehrere Antriebe, nämlich für jeden der Motoren ein Antrieb, vorgesehen. Derartige Drohnen oder Flugdrohnen werden auch als Multicopter bezeichnet. Abhängig von der Zahl der Motoren - und der Zahl der elektromotorischen Antriebe - spricht man beispielsweise von Quadrocoptern, die also vier Motoren aufweisen.

Derartige Flugdrohnen können - je nach Auslegung - auch eine deutlich höhere Zahl von Motoren aufweisen. Es sind beispielsweise Drohnen mit zwölf oder mehr Antrieben bekannt.

Das bekannte Fluggerät erhält seine Spannungsversorgung von einem in der Regel wieder aufladbaren, austauschbaren Akku. Die Flugdauer des Fluggerätes ist durch die Nennleistung des Akkus begrenzt. Das Fluggerät weist eine vorgegebene, maximale Traglast auf, so dass auch die Baugröße des Akkus Einschränkungen unterliegt.

Ausgehend von einem durch offenkundige Vorbenutzung bekannt gewordenen, druckschriftlich nicht belegbaren Fluggerät, besteht die Aufgabe der Erfindung darin, das Fluggerät derartig weiterzubilden, dass es in neuen Anwendungsbereichen einsetzbar ist.

Die Erfindung löst diese Aufgabe mit den Merkmalen des Anspruches 1.

Die Erfindung bezieht sich auf ein Fluggerät, das wenigstens einen Elektromotorenantrieb aufweist. Vorzugsweise weist das erfindungsgemäße Fluggerät eine Mehrzahl elektromotorischer Antriebe, insbesondere mindestens drei Elektromotoren auf. Weiter vorzugsweise entspricht die Zahl der elektromotorischen Antriebe, also die Zahl der Elektromotoren, der Anzahl der vorhandenen Rotoren oder Propeller, so dass in der Regel jedem Rotor ein Elektromotor zugeordnet ist.

Das Fluggerät weist darüber hinaus eine Steuerung auf, mit der das Fluggerät eine eingestellte Flugposition dauerhaft bewahren kann. Die Steuerung ist eine vorzugsweise an dem Fluggerät unmittelbar angeordnete Elektronikeinheit, insbesondere umfassend wenigstens einen Prozessor, die unter Zuhilfenahme von geeigneter Sensorik, wie beispielsweise Lageveränderungssensoren, und/oder Beschleunigungssensoren, und/oder Positionssensoren, eine stabile oder weitestgehend stabile relative Ortsposition des Fluggerätes gewährleisten kann. Insbesondere ist die Steuerung in der Lage, die angestrebte Flugposition dauerhaft zu bewahren, ohne, dass dies ein fortwährendes oder regelmäßiges Eingreifen einer Bedienperson erfordert.

Hierzu kann auf herkömmliche Steuerungen und Steuerungsverfahren zurückgegriffen werden, die bei herkömmlichen Fluggeräten, insbesondere bei herkömmlichen Drohnen, bereits Anwendung finden, und an sich bekannt sind.

Das Fluggerät kann also, insbesondere durch eine benutzergeführte Steuerung, zu einen bestimmtem Ort hin gesteuert werden, z. B. eine bestimmte Position in einem bestimmten Abstand von einem festgelegten, auf dem Boden angebrachten Körper einnehmen, und kann die so gewählte Flugposition sodann automatisch dauerhaft beibehalten.

Das Fluggerät ist gemäß der Erfindung über eine Kabelanordnung mit einer Bodenstation verbindbar. Hierzu weist das Fluggerät insbesondere wenigstens einen Anschluss zur lösbaren Verbindung des Fluggerätes mit der Kabelanordnung auf. Die Kabelanordnung ist darüber hinaus mit einer Bodenstation verbindbar. Die Bodenstation ist fest am Boden angeordnet.

Die Kabelanordnung kann eine Länge von beispielsweise zwischen 5 und 500 Metern, vorzugsweise eine Länge zwischen 50 und 120 Metern, aufweisen. Das Fluggerät ist in eine Flugposition verbringbar, die eine maximale Höhe, also einen Abstand zum Boden aufweist, der der Länge der Kabelanordnung entspricht.

Gemäß der Erfindung ist des weiteren vorgesehen, dass die Kabelanordnung wenigstens zwei elektrische Leiter zur Bereitstellung einer Spannungsversorgung für den Antrieb umfasst.

Das Fluggerät erhält insoweit die Betriebsspannung, mit der die elektromotorischen Antriebe versorgt werden, unmittelbar von der Bodenstation über die Kabelanordnung. Das Fluggerät muss insoweit selbst gar nicht mehr über eigene mitzunehmende Batterie oder einen Akkumulator verfügen. Die Spannungsversorgung des Antriebs kann ausschließlich - oder zumindest teilweise oder temporär - über die Kabelanordnung erreicht werden. Insbesondere kann das Fluggerät durch Gewährleistung einer dauerhaften Spannungsversorgung eine praktisch beliebig lange Zeit, also z. B. auch mehrere Stunden oder Tage lang, in der eingestellten Flugposition verbleiben.

Angemerkt sei, dass das Fluggerät aufgrund der erfindungsgemäß bereitgestellten Möglichkeit einer deutlich verlängerten Bewahrung der eingestellten Flugposition gemäß einer vorteilhaften Ausgestaltung der Erfindung auch eine Möglichkeit zur Korrektur der tatsächlich bestehenden Flugposition relativ zur eingestellten Soll-Flugposition besitzt und eine solche Korrektur durchführen kann.

Während die Steuerung eines Fluggerätes herkömmlicher Art bereits über erstaunlich exakte und präzise Mechanismen verfügt, um selbst bei Wind, auch bei stärkeren Winden, eine eingestellte Flugposition zu bewahren, kann bei den erfindungsgemäß möglichen Dauereinsätzen von mehreren Stunden oder gar mehreren Tagen (bis zu Wochen) ggf. eine Korrektur der tatsächlich erreichten Flugposition im Hinblick auf die eingestellte Soll-Flugposition erforderlich werden. Hierzu kann das Fluggerät über besondere Positions-Korrekturmittel verfügen, die beispielsweise im Falle des Auftretens von Abweichungen außerhalb vorbestimmter Soll-Grenzen von der Soll-Flugposition für eine automatische Rückführung des Fluggerätes in die Soll-Flugposition sorgen. Hierzu können beispielsweise GPS-Positionier- oder Re-Positionierhilfen oder andere geeignete Positionsmess- und Positionskorrekturverfahren vorgesehen sein.

Gemäß der Erfindung ist darüber hinaus vorgesehen, dass die Kabelanordnung ein Glasfaserkabel zur Übermittlung von Daten und/oder Signalen aufweist.

Die Kabelanordnung ist erfindungsgemäß nach Art eines hybriden Kabels ausgebildet. Die Kabelanordnung umfasst wenigstens eine Glasfaser, die die Übermittlung von Daten oder Signalen auf optische Weise ermöglicht. Hierzu können Daten und/oder Signale zwischen dem Fluggerät und der Bodenstation - unidirektional oder bidirektional - übertragen werden. Das Glasfaserkabel ermöglicht dabei sehr hohe Datenübertragungsraten, und insbesondere auch eine besonders einfache Möglichkeit, die Daten und/oder Signale sowohl am Fluggerät, als auch auf der Bodenstation in die Glasfaser einzukoppeln, bzw. wieder auszukoppeln.

Insbesondere kommt ein Datenübertragungsverfahren in Betracht, welches als Radio-over-Fiber (RoF) oder RF-over-Fiber (RFoF) fungiert. Mit dieser Technologie wird ein über die Glasfaser geleiteter Lichtstrom mit einem Radiofrequenzsignal moduliert.

Zugleich umfasst die Kabelanordnung aber wenigstens zwei elektrische Leiter zur Bereitstellung einer Spannungsversorgung des Antriebs. Über die wenigstens zwei elektrischen Leiter können die elektrischen Antriebe am Fluggerät entweder mit Gleichspannung oder mit Wechselspannung versorgt werden.

Die erfindungsgemäße Kabelanordnung kann auf herkömmliche elektrische Leiter und herkömmliche Glasfaserkabel zurückgreifen, und diese zu einer erfindungsgemäßen Kabelanordnung miteinander kombinieren. Beispielsweise können zwei elektrische Leiter (oder auch mehrere elektrische Leiter) mit einer herkömmlichen Glasfaser verbunden, z. B. verklebt, verschweißt oder punktuell oder bereichs- oder stellenweise verbunden werden. Von der Erfindung sind aber auch Kabelanordnungen hybrider Art umfasst, bei denen beispielsweise ein Glasfaserkabel mit zwei elektrisch leitenden Mänteln umhüllt sind, die voneinander durch eine dazwischen liegende Zwischenschicht getrennt sind.

Die erfindungsgemäße hybride Kabelanordnung ist bei einer Länge von 100 Metern mit einem Gewicht in der Größenordnung von etwa 4 Kilogramm realisierbar. Eine herkömmliche Flugdrohne kann Traglasten bis beispielsweise 15 Kilogramm tragen. Nach Abzug der etwa 4 Kilogramm für die Hybridkabelanordnung verbleibt eine Resttraglast von beispielsweise 11 Kilogramm.

Dies ermöglicht eine Anordnung von Sende- und Empfangstechnik auf dem Fluggerät, einschließlich der Anordnung von elektrooptischen Wandlern oder optisch elektrischen Wandlern, die eine Signaleinkopplung in die Glasfaser bzw. eine Auskopplung vornehmen.

Die von dem Fluggerät zu installierende Technik kann auf Antennen, Filter, z. B. Duplexer, Sende- und Empfangsverstärker und Wandler beschränkt werden.

Die gegenüber der Sende- und/oder Empfangstechnik an dem Fluggerät weitaus komplexer aufgebaute, schwere Signalverarbeitungstechnik einschließlich der Sende- und Empfangstechnik und der Verstärker, kann an der Bodenstation angeordnet werden. Deren Anordnung auf der Flugdrohne ist unter Berücksichtigung der geringen Traglasten ohnehin nicht möglich.

Das erfindungsgemäße Fluggerät kann so als ein zentrales Element eines Funknetzes eingesetzt werden. Insbesondere kann das Fluggerät für temporär aufzubauende Funknetze, wie beispielsweise für die Berichterstattung bei großen Sportveranstaltungen, oder Events, eingesetzt werden. Hier kommt es häufig zu schlechter Funkqualität, beispielsweise aufgrund von Verschattungen. Im Stand der Technik war es hierzu üblich, Hubarbeitsbühnen vorzusehen, die in dem Hubwagen angeordnet die schwere Sende- und Empfangstechnik aufweisen, und aufgrund der erhabenen, d. h. weit über dem Boden angeordneten Position, eine gute Funkverbindung zu den einzelnen Teilnehmern ermöglichte. Erfindungsgemäß kann auf den Einsatz derartiger Hubwagen bei Einsatz des erfindungsgemäßen Fluggerätes verzichtet werden.

An dem Fluggerät ist erfindungsgemäß zumindest eine Antenne angeordnet. Die Antenne kann als Empfangsantenne fungieren, oder als Sendeantenne, oder als Sende- und Empfangsantenne.

Das erfindungsgemäße Fluggerät kann in einem Funknetzwerk eingesetzt werden, um mit einer Mehrzahl von Teilnehmern eine Funkverbindung aufzubauen. In einem ersten Betriebsmodus ist das Fluggerät dazu ausgebildet, von Teilnehmern gesendete Funksignale zu empfangen, über einen elektrooptischen Wandler in die Glasfaser einzukoppeln, und zur Bodenstation zu leiten. In der Bodenstation werden die Signale dann unter Zuhilfenahme eines optoelektronischen Wandlers - ggf. unter Zwischenschaltung eines Verstärkers - aus der Glasfaser entkoppelt, und weiter verarbeitet.

Gemäß einem weiteren alternativen Betriebsmodus ist das Fluggerät dazu ausgebildet, unter Zuhilfenahme einer am Fluggerät angeordneten Antenne Funksignale an Teilnehmer des Funknetzes zu senden. Hierzu werden von der Bodenstation unter Zuhilfenahme eines elektrooptischen Wandlers Signale in die Glasfaser eingekoppelt, und unter Zuhilfenahme einer optischelektronischen Wandlereinheit am Fluggerät die Signale ausgekoppelt, und sodann - ggf. nach Verstärkung - über die Antenne abgestrahlt.

Die beiden vorbeschriebenen Betriebsarten können jeweils in einem unidirektionalen Betrieb der Kabelanordnung erreicht werden.

Von der Erfindung ist aber auch umfasst, wenn im Rahmen eines bidirektionalen Betriebes sowohl ein Empfangs- als auch ein Sendebetrieb erfolgt. In diesem Falle kann das Fluggerät nach Art eines optischen Repeaters eingesetzt werden, und die von den Teilnehmern des Funknetzes empfangenen Signale zum Zwecke der Verstärkung an die Bodenstation übermitteln, und nach Erhalt verstärkter Signale von der Bodenstation diese als Funksignale wieder emittieren. Hierdurch wird die Funknetzqualität und die Reichweite des Funknetzes erheblich verbessert.

Von der Erfindung ist auch umfasst, wenn an dem Fluggerät eine oder mehrere Antennen angeordnet sind.

Von der Erfindung ist weiter umfasst, wenn die Kabelanordnung ein oder mehrere Glasfasern aufweist.

Generell ist es möglich, ein Glasfaserkabel für den bidirektionalen Betrieb zu nutzen.

Über die wenigstens zwei elektrischen Leiter, die eine Spannungsversorgung für den elektromotorischen Antrieb bereitstellen, kann zugleich auch eine Spannungsversorgung für die elektronischen Komponenten der Signalsende- und Empfangstechnik an dem Fluggerät bereitgestellt werden. Von der Erfindung ist aber auch umfasst, wenn zur Erzielung der Spannungsversorgung für die Sende- und Empfangstechnik an dem Fluggerät weitere gesonderte elektrische Leiter als Bestandteil der Kabelanordnung mitgeführt werden.

Generell ist es aber das Bestreben der Erfindung, die Kabelanordnung möglichst leichtbauend auszubilden.

Gemäß einer vorteilhaften Ausgestaltung der Erfindung ist an dem Fluggerät eine Sende- und/oder Empfangseinheit für Funksignale angeordnet. Die Sende- und/oder Empfangseinheit für Funksignale kann eine oder mehrere Antennen umfassen. Sie kann darüber hinaus ein oder mehrere elektronische Bauelemente aufweisen, die die erforderliche Signalverarbeitung durchführen, um empfangene Funksignale dem elektrooptischen Wandler zuzuführen, mit dem Zweck, diese optisch auf das Glasfaserkabel einzukoppeln und oder die erforderlichen elektronischen Komponenten umfassen, um aus der Glasfaser heraus ausgekoppelte optische Signale in elektrische Signale zu wandeln und so zu verarbeiten, dass diese über eine Antenne gesendet werden können.

Grundsätzlich kann zur Bereitstellung einer Sende- und/oder Empfangseinheit an dem Fluggerät auf herkömmliche, elektronische Bauelemente zurückgegriffen werden.

Gemäß der Erfindung ist darüber hinaus vorgesehen, dass an dem Fluggerät eine Wandlereinheit angeordnet ist, die elektronische Signale in optische, auf das Glasfaserkabel aufkoppelbare Signale wandelt. Weiter und/oder alternativ ist vorgesehen, dass an dem Fluggerät eine Wandlereinheit vorgesehen ist, die optische, aus dem Glasfaserkabel auskoppelbare Signale in elektrische Signale wandelt. Auch hier kann die Erfindung auf herkömmliche elektronische Bauteile und Bauelemente für die Wandlereinheit zurückgreifen.

Gemäß einer weiteren vorteilhaften Ausgestaltung der Erfindung weist das Fluggerät einen Anschluss auf, über den das Glasfaserkabel lösbar anbringbar ist. Hier kann beispielsweise auf herkömmliche Schnittstellen zurückgegriffen werden. Es kann sich dabei beispielsweise um Steckanschlüsse handeln.

Gemäß einer weiteren vorteilhaften Ausgestaltung der Erfindung ist das Fluggerät über die Kabelanordnung mit der Bodenstation verbindbar. Hierdurch kann erreicht werden, dass das Fluggerät eine eingestellte Flugposition unter fortwährender Bereitstellung einer Spannungsversorgung über sehr lange Zeiträume bewahren kann.

Gemäß einer weiteren vorteilhaften Ausgestaltung der Erfindung ist das Fluggerät nach Art einer Drohne ausgebildet. Weiter vorteilhaft ist das Fluggerät nach Art eines Multicopters, z. B. nach Art eines Quadrocopters, ausgebildet. Dies ermöglicht einen Rückgriff auf herkömmliche Fluggeräte, die entsprechend der Erfindung modifiziert werden können, beispielsweise mit einer Sende-Empfangseinheit, mit einer Wandlereinheit, und/oder mit einem Anschluss für eine Kabelanordnung versehen werden können.

Das erfindungsgemäße Fluggerät kann auch nach Art eines Helikopters ausgebildet sein und insbesondere zwei Rotoren oder zwei Rotoranordnungen aufweisen.

Insbesondere werden im Sinne der vorliegenden Patentanmeldung als Helikopter solche Fluggeräte verstanden, die wenigstens einen Rotor aufweisen, der um eine im Wesentlichen vertikal ausgerichtete Drehachse dreht, sowie wenigstens einen weiteren Rotor aufweisen, der um eine im Wesentlichen horizontal ausgerichtete Drehachse dreht. Bei derartigen Helikoptern kann beispielsweise auch eine Neigungseinstellung der Rotorblätter unter Zuhilfenahme einer Taumelscheibe erfolgen, wie dies bei herkömmlichen Helikoptern zur Einstellungen des Pitches, also der Einstellung der Neigung oder des Anstellwinkels der Rotorblätter, bekannt ist.

Die Erfindung betrifft darüber hinaus ein Funknetzwerk nach Anspruch 7.

Der Erfindung liegt die Aufgabe zugrunde, ein Funknetzwerk bereitzustellen, das eine verbesserte Funknetzqualität und/oder eine verbesserte Reichweite ermöglicht.

Diese Aufgabe löst die Erfindung mit den Merkmalen des Anspruches 7.

Bezüglich des Verständnisses der Begriffe und Merkmale des Gegenstandes des Anspruches 7 wird zur Vermeidung von Wiederholungen auf die oben, zu den Ansprüchen 1 bis 6 gefertigten Ausführungen verwiesen.

Das erfindungsgemäße Funknetzwerk umfasst wenigstens eine Bodenstation, wenigstens ein Fluggerät, und wenigstens eine Kabelanordnung, über die das Fluggerät mit der Bodenstation verbunden ist. An dem Fluggerät ist wenigstens ein elektromotorischer Antrieb vorgesehen, der mit einer Betriebsspannung zu versorgen ist. Hierzu weist die Kabelanordnung wenigstens zwei elektrische Leiter auf.

Darüber hinaus weist die Kabelanordnung wenigstens ein Glasfaserkabel auf.

Das erfindungsgemäße Funknetzwerk umfasst - neben dem Fluggerät - ein oder mehrere Funknetzwerkteilnehmer. Es kann sich dabei beispielsweise um stationäre aber auch um mobile Teilnehmer handeln, d. h., um Teilnehmer, die ihre Position ändern können.

Die Funknetzteilnehmer können - je nach Betriebsart - Funkdaten empfangen und/oder senden. Die von den Teilnehmern gesendeten Funkdaten können gemäß einer ersten Variante von einer an dem Fluggerät angeordneten Empfangseinheit für die Funksignale empfangen werden.

Gemäß einer zweiten Betriebsart können die Funknetzteilnehmer Funkdaten empfangen. Gemäß dieser Betriebsart können die entsprechenden Funkdaten von einer an dem Fluggerät angeordneten Sendeeinheit gesendet werden.

Von der Erfindung sind auch Funknetzwerke umfasst, die beide zuvor beschriebenen Betriebsarten beherrschen, bzw. zeitgleich oder auch zeitversetzt durchführen können.

Als Funkdaten werden also diejenigen Informationen verstanden, die entweder unidirektional oder bidirektional zwischen der an einem Fluggerät angeordneten Sende- oder Empfangseinheit und den einzelnen Teilnehmern ausgetauscht werden können.

Die Funksignale können beispielsweise im Megahertzbereich, beispielsweise im L-Bandfrequenzbereich zwischen 950 Megahertz und 2.150 Megahertz liegen, aber auch in anderen Frequenzbereichen.

Diese Funkdaten können über das Glasfaserkabel von dem Fluggerät an die Bodenstation und/oder von der Bodenstation an das Fluggerät übermittelt werden. Alternativ zu der Übermittlung von Funkdaten ist von der Erfindung auch eine Übermittlung von Signalen umfasst, die Funkdaten entsprechen.

Gemäß einer Ausführungsvariante ist das Funknetzwerk als Intercom-Netzwerk ausgebildet, bzw. lässt einen Einsatz oder eine Nutzung des Funknetzwerkes als Intercom-Netzwerk zu. Hier können die einzelnen Teilnehmer oder zumindest einige der Teilnehmer über Wechselsprechanlagen verfügen, und sich unter Zuhilfenahme des Funknetzes miteinander austauschen.

Über das Funknetzwerk können neben Audiodaten aber auch Sprachdaten, Bilddaten oder andere Informationen oder Daten ausgetauscht werden.

Gemäß einer weiteren vorteilhaften Ausgestaltung der Erfindung umfassen die Funkdaten Video- und oder Bildinformationen und/oder Audioinformationen.

Gemäß einem weiteren Aspekt der Erfindung betrifft die Erfindung ein Verfahren zur Übertragung von Informationen nach Anspruch 10.

Der Erfindung liegt die Aufgabe zugrunde, ein Verfahren bereitzustellen, mit dem eine Übertragung von Informationen verbessert wird.

Die Erfindung löst diese Aufgabe mit den Merkmalen des Anspruches 10.

Zur Vermeidung von Wiederholungen wird bezüglich der Bedeutung und Auslegung der Merkmale und dem Verständnis der Erfindung nach Anspruch 10 auf die vorherigen Ausführungen zu den Ansprüchen 1 bis 9 verwiesen.

Weitere Vorteile der Erfindung ergeben sich aus den nicht zitierten Unteransprüchen und der nachfolgend in den Figuren dargestellten Ausführungsbeispiele.

In den Figuren zeigen
- Fig. 1: in einer teilgeschnittenen schematischen Ansicht ein Ausführungsbeispiel eines erfindungsgemäßen Funknetzwerkes einschließlich eines ersten Ausführungsbeispiels eines erfindungsgemäßen Fluggerätes in einer schematischen teilgeschnitten Ansicht,
- Fig. 2: in einer teilgeschnittenen schematischen Ansicht das Fluggerät der Fig. 1 in vergrößerter Einzeldarstellung, unter blockschaltbildartiger Darstellung einiger elektronischer Komponenten,
- Fig. 3: die Bodenstation der Fig. 1 in vergrößerter schematischer Einzeldarstellung, unter blockschaltbildartiger Darstellung einiger elektronischer Komponenten,
- Fig. 4a und 4b: in Zusammenschau den schaltungstechnischen Aufbau von Antenne bis zu dem Empfänger als Empfangszweig,
- Fig. 5a und 5b: in Zusammenschau die elektronische Schaltung von den Sendeeinheiten bis zur Antenne in einer Schaltung als Sendezweig,
- Fig. 6: in einer teilgeschnittenen schematischen Ansicht einen schematischen Querschnitt durch die Kabelanordnung der Fig. 1 etwa entlang Schnittstelle VI-VI in Fig. 1 und
- Fig. 7: in einer Darstellung gemäß Fig. 6 ein weiteres Ausführungsbeispiel einer Kabelanordnung im Querschnitt.

Ausführungsbeispiele der Erfindung sind in der nachfolgenden Figurenbeschreibung, auch unter Bezugnahme auf die Zeichnungen, beispielhaft beschrieben. Dabei werden der Übersichtlichkeit halber - auch soweit unterschiedliche Ausführungsbespiele betroffen sind - gleiche oder vergleichbare Teile oder Elemente oder Bereiche mit gleichen Bezugszeichen, teilweise unter Hinzufügung kleiner Buchstaben, bezeichnet.

Merkmale, die nur in Bezug zu einem Ausführungsbeispiel beschrieben sind, können im Rahmen der Erfindung auch bei jedem anderen Ausführungsbeispiel der Erfindung vorgesehen werden. Derartig geänderte Ausführungsbeispiele sind - auch wenn sie in den Zeichnungen nicht dargestellt sind - von der Erfindung mit umfasst.

Alle offenbarten Merkmale sind für sich erfindungswesentlich. In die Offenbarung der Anmeldung wird hiermit auch der Offenbarungsinhalt der zugehörigen Prioritätsunterlagen (Abschrift der Voranmeldung) sowie der zitierten Druckschriften und der beschriebenen Vorrichtungen des Standes der Technik vollinhaltlich mit einbezogen, auch zu dem Zweck, einzelne oder mehrere Merkmale dieser Unterlagen in einen oder in mehrere Ansprüche der vorliegenden Anmeldung mit aufzunehmen.

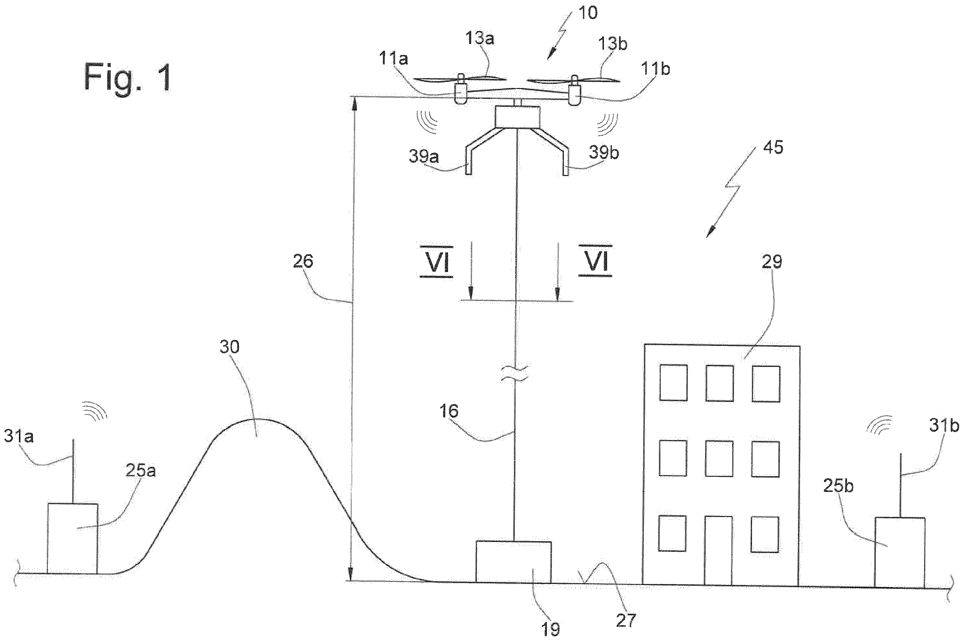

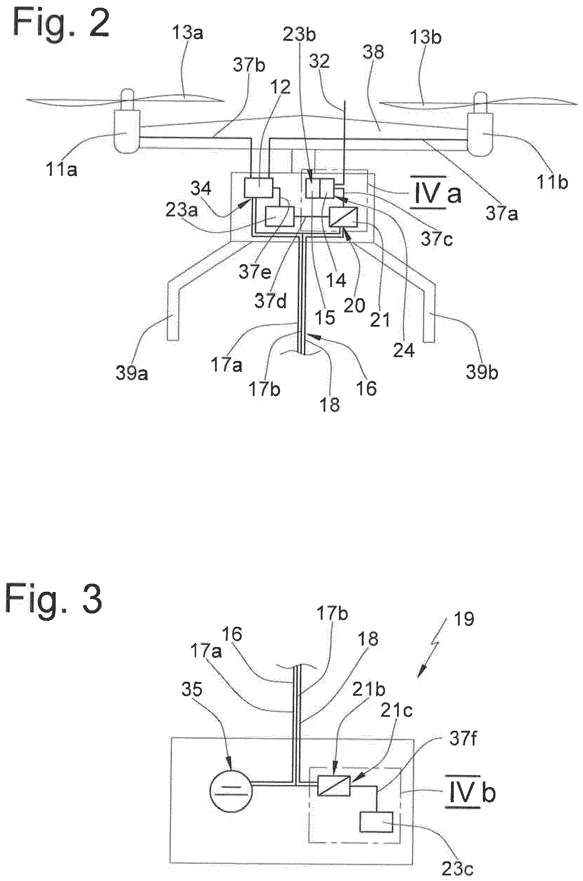

Das in seiner Gesamtheit in den Zeichnungen mit 10 bezeichnete Fluggerät weist bei dem Ausführungsbeispiel gemäß den Darstellungen der Fig. 1 und 2 vier Rotoren auf, wobei nur zwei Rotoren 13a, 13b sichtbar sind. Jedem Rotor oder Propeller ist ein eigener Antrieb 11a, 11b zugeordnet, der als Elektromotor ausgebildet ist, und im Sinne dieser Patentanmeldung auch als elektromotorischer Antrieb 11a, 11b bezeichnet wird. Eine in Fig. 2 gemäß dem schematischen Blockschaltbild dargestellte Steuerung 12 ist in der Lage, durch Ansteuerung der Antriebe 11a, 11b über entsprechende Steuerleitungen 37a, 37b das Fluggerät 10 in eine vorgegebene oder gewünschte Flugposition hin zu verlagern bzw. eine gewünschte Flugbewegung des Fluggerätes 10 durchzuführen.

Die Drohne 10, also das Fluggerät, weist ausweislich der Detaildarstellung der Fig. 2 einen nur schematisch angedeuteten Tragkörper 38 auf, der die Rotoren 13a, 13b, die Antriebe 11a, 11b und die gesamte, später im einzelnen noch zu erläuternde Elektronik trägt. Von dem Tragkörper 38 erstrecken sich mittelbar und unmittelbar nach unten Füße 39a, 39b, die eine sichere Landung des Fluggerätes 10 ermöglichen.

Ausweislich Fig. 1 kann das Fluggerät vom Boden 27 abheben, und eine maximale Höhe 26 erreichen. Die Höhe 26 kann beispielsweise zwischen 50 und 100 Meter betragen.

Das Fluggerät 10 ist über eine Kabelanordnung 16 mit einer schematisch in Fig. 1 dargestellten Bodenstation 19 verbunden.

Unter Zuhilfenahme des Fluggerätes 10 kann ein insgesamt mit 45 bezeichnetes Funknetz ausgebildet werden, das beliebig viele Teilnehmer 25a, 25b aufweist. Von den Teilnehmern 25a, 25b können unter Zuhilfenahme von angedeuteten Antennen 31a, 31b Funksignale an das Fluggerät 10 übermittelt werden. Das Fluggerät 10 kann - wie in Fig. 2 gezeigt - ebenfalls über eine Antenne 32, in diesem Fall über eine Empfangsantenne, verfügen.

Bei einer anderen Betriebsart bzw. ggf. auch gleichzeitig kann von dem Fluggerät 10 unter Zuhilfenahme der Antenne 32, die dann als Sendeantenne ausgebildet, auch eine Emission von Funksignalen erfolgen, die dann von den Teilnehmern 25a, 25b empfangen werden können.

Die Drohne 10 wird zur Bereitstellung eines erfindungsgemäßen Funknetzes 45 vorteilhafterweise derartig eingesetzt, dass sie eine Höhe 26 aufweist, die die Höhen von in Fig. 1 beispielhaft angedeuteten Bodenunebenheiten 30 und/oder Gebäuden 29 oder anderen Hindernissen übersteigt. So kann vorzugsweise eine direkte, von Hindernissen freigehaltene Funkstrecke zwischen Teilnehmer 25a, 25b und Fluggerät 10 erreicht werden.

Die Höhe 26 kann vorteilhafterweise zwischen 30 und 200 Metern betragen.

Die Kabelanordnung 16 verfügt über wenigstens zwei elektrische Leiter 17a, 17b, über die die Antriebe 11a, 11b mit einer Versorgungsspannung versorgt werden können. Es kann sich dabei beispielsweise um Gleichspannung, aber auch um Wechselspannung handeln.

Die Kabelanordnung 16 ist hierfür über einen Anschluss 34 am Fluggerät 10 - unmittelbar oder mittelbar - mit der Steuerung 12 lösbar verbunden. Die Steuerung 12 kann - entsprechend der erhaltenen Flugkommandos zum Erreichen der gewünschten Flugposition - eine entsprechende Ansteuerung der Antriebe 11a, 11b und damit auch der Rotoren 13a, 13b vornehmen. Die Flugkommandos können die Steuerung entweder über die elektrischen Leiter 17a, 17b - ggf. als aufmodulierte Signale - oder über die Glasfaserleitung 18 oder über eine gesonderte Funkstrecke von einem bodenseitig angebrachten Steuergerät, insbesondere bedienergeführt, ggf. auch unmittelbar von der Bodenstation 19, erhalten.

Ausweislich des Ausführungsbeispiels der Fig. 2 ist der Anschluss 34 an einem elektronischen Bauelement angeordnet, welches die Steuerung 12 umfasst. Von diesem Bauelement können - wie in Fig. 2 dargestellt - Steuerleitungen 37a, 37b zu den jeweiligen Antrieben 11a, 11b verlaufen. Die Steuerung, insbesondere eine darin angeordnete Intelligenz oder Logik, z. B. ein Mikroprozessor, kann für eine entsprechende Ansteuerung der Antriebe 11a und 11b sorgen, und über die Steuerleitung 37a, 37b die Elektromotoren 11a, 11b gesteuert mit Betriebsspannung versorgen. Alternativ kann ausgehend von einem Anschluss 34 auch zunächst eine Aufsplittung der Spannungsversorgungsleitungen derart erfolgen, dass jeder der Elektromotoren 11a, 11b mit einer eigenen Spannungsversorgungsleitung verbunden ist, und von der Steuerung 12 gesonderte Signalleitungen zusätzlich zu den einzelnen Elektromotoren 11a, 11b verlaufen.

Dies wird in das Belieben des Fachmanns gestellt.

Die Leiter 17a, 17b, sind im Bereich der Bodenstation 19 gemäß Fig. 3 mit einer Spannungsquelle 35 verbunden, beispielsweise mit einer Batterie, aber vorzugsweise mit der Netzversorgung oder mit einem Generator. Die Verbindung kann ggf. unter Zwischenschaltung von Transformatoren oder dergleichen erfolgen.

Die Bodenstation 19 kann gleichermaßen einen nicht dargestellten Anschluss für die Kabelanordnung 16 aufweisen, über den die Kabelverbindung lösbar mit der Bodenstation verbindbar ist. Ggf. kann die Kabelverbindung auf einer Winde aufgewickelt, bzw. von dieser abgewickelt werden.

Die Kabelanordnung 16 umfasst darüber hinaus ein Glasfaserkabel 18. Das Glasfaserkabel 18 ist über einen Anschluss 20 an das Fluggerät 11 angeschlossen. Die Anschlüsse 20, 34 ermöglichen eine lösbare Verbindung zwischen Kabelanordnung 16 und Fluggerät. Denkbar ist insbesondere eine Steckverbindung.

Dabei kann gemäß einer Variante der Erfindung auch vorgesehen sein, dass die Anschlüsse 20 und 24 von einem gemeinsamen Anschluss bereitgestellt sind.

Die elektronische Schaltung der Bauelemente des Fluggerätes 10 wird anhand der Fig. 2 nur schematisch angedeutet.

Das Fluggerät 10 weist eine Antenne 32 auf, die mit einer Sendeeinheit 14 für Funksignale, oder mit einer Empfangseinheit 15 für Funksignale unmittelbar oder mittelbar verbunden ist. Ausweislich Fig. 2 weist das Fluggerät 10 eine kombinierte Sende- und Empfangseinrichtung 14, 15 für Funksignale auf, so dass - jedenfalls theoretisch - ein bidirektionaler Funk-Empfangs- und Sendebetrieb möglich ist.

Die Sende- und Empfangseinheit 14, 15 ist über eine Signalleitung oder Steuerleitung 37c mit einer Wandlereinheit 21 verbunden. Die Wandlereinheit wandelt von der Empfangseinheit 15 empfangene elektrische Funksignale in optische Signale um, und ermöglicht ein Aufkoppeln dieser Signale auf die Glasfaser 18.

Ausweislich Fig. 3 weist die Bodenstation 19 eine ebenfalls mit der Glasfaser 18 verbundene Wandlereinheit 21b auf, die die optischen Signale von der Glasfaser 18 auskoppelt, und in elektronische Signale wandelt. Über eine Steuerleitung 37f ist die Wandlereinheit 21b mit der Signalverarbeitungseinheit 23c verbunden.

Mit dieser Ausführungsform ist es insoweit möglich, dass die Antenne 32 Signale von den Teilnehmern 25a, 25b des Funknetzwerkes 45 empfängt, und an die Empfangseinheit 15 weiterleitet. Von dort werden die Signale einer Wandlereinheit 21 übermittelt, die die Signale aufkoppelt, zur Bodenstation 16 leitet, und sie von der Wandlereinheit 21b ausgekoppelt und in elektrische Signale gewandelt werden, und von der Signalverarbeitungseinrichtung 23c verarbeitet werden.

Im umgekehrten Betriebsmodus kann das Fluggerät 10 zu einer Sendestation werden:
Hier werden von der Signalverarbeitungseinheit 23c über die Leitung 37f Signale an eine Wandlereinheit 21c gesandt, die die elektrischen Signale von der Signalverarbeitungseinheit 37f in optische Signale wandelt, und diese auf die Glasfaser 18 aufkoppelt. Die Wandlereinheit 21 an dem Fluggerät 10 ist nun eine optische-elektronische Wandlereinheit, und wandelt die aus der Glasfaser 18 ausgekoppelten Signale in elektrische Signale um, übermittelt diese zu einer Sendeeinheit 14, von wo sie aus über die Antenne 32 emittiert werden. Hierdurch können Funksignale im Radiofrequenzbereich an die Teilnehmer übermittelt werden.

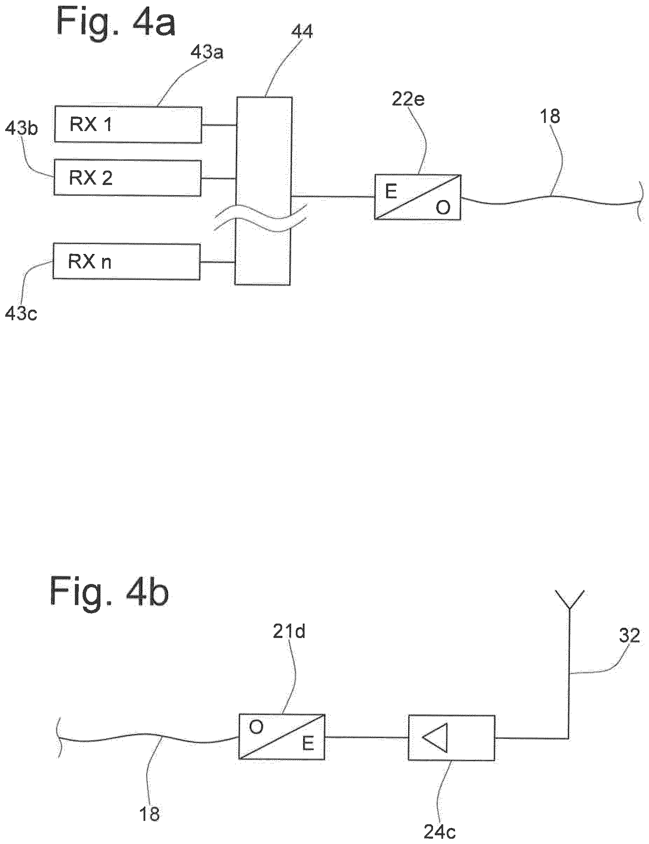

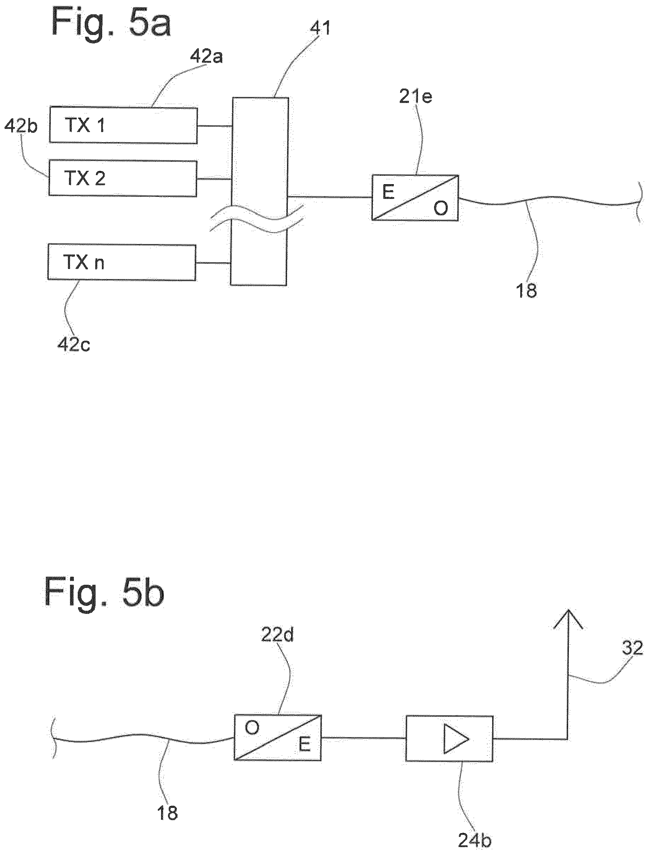

Die entsprechenden elektronischen Bauelemente für die Signalverarbeitung - und Weiterleitung sind in den Figuren 4a und 4b und 5a und 5b im Detail dargestellt:
Fig. 4b beschreibt den Empfangszweig:
   An der Antenne 32 des Fluggerätes 10 liegen Signale an, die von einer Verstärkereinheit 24c zunächst verstärkt werden. Angemerkt sei, dass die Empfangseinheit 15 des Fluggerätes 10 gemäß Fig. 2 eine solche Verstärkereinheit 24c bilden oder umfassen kann.

Von der Verstärkereinheit 24c werden die elektrischen Signale an eine Wandlereinheit 21d übermittelt, die die elektronisch anliegenden Signale in optische Signale wandelt, und auf die Glasfaser 18 aufkoppelt.

Der Empfangszweig im Bereich der Bodenstation 19 ist in Fig. 4a erläutert:
Die auf der Glasfaser 18 anliegenden Signale werden über die Wandlereinheit 22e nach Auskopplung in elektrische Signale gewandelt, und sodann an eine HF-Verteilereinheit 44 weitergeleitet. Von dort gelangen die Signale an die einzelnen Receiver 43a, 43b, 43c.

Im Sendebetrieb veranschaulichen die Figuren 5a und 5b die Signalverarbeitung:
Ausgehend von den Sendeeinheiten 42a, 42b, 42c im Bereich der Bodenstation 19 werden die Signale zunächst an eine Hochfrequenz-Kombiniereinheit 41 (HF Combiner) übermittelt. Von dort werden die Signale über einen elektrooptischen Wandler 21e auf die Glasfaser 18 aufgekoppelt. Gemäß 5b werden die Signale im Bereich des Fluggerätes 10 von einer weitere Wandlereinheit 22d ausgekoppelt, und von optischen in elektronische Signale gewandelt. Sodann kann die Verstärkereinheit 424b die dort anliegenden Funksignale verstärken, und zu der Antenne 32 übermitteln. Von dort werden die Signale emittiert. Die Verstärkereinheit 24b kann die Sendeeinheit 14 für Funksignale gemäß Fig. 2 bereitstellen, oder Bestandteil einer solchen Sendeeinheit 14 sein.

Dem Fachmann ist deutlich, dass weitere elektrische und elektronische Komponenten, wie beispielsweise Filter, vorgesehen sein können, die herkömmlich aus der RF-Funktechnik bekannt sind, und entsprechend an der Bodenstation 19 bzw. am Fluggerät 10 vorgesehen sein können.

Dabei ist insbesondere von Bedeutung, dass die schweren Bestandteile und Elemente der Sende- und Empfangstechnik, wie beispielsweise die einzelnen Empfänger 43a, 43b, 43c und die einzelnen Sender 42a, 42b, 42c, sowie die HF-Verteilereinheiten 44 bzw. die HF-Combiner 41 aufgrund ihres hohen Gewichtes an der Bodenstation 19 angeordnet sind.

Gemäß einer besonderen Ausgestaltung der Erfindung kann das Fluggerät 10 unter Bereitstellung eines Funknetzes 45 bidirektional operieren. Hier kann das Fluggerät 10 zusammen mit der Bodenstation 19 und der Kabelanordnung 16 nach Art eines optischen Repeaters fungieren. Dafür werden die Signale bidirektional auf der Glasfaser 18 übermittelt. Von der Empfangseinheit 15 empfangene Signale werden zur Bodenstation 19 geleitet, dort verstärkt, bzw. aufbereitet, über die Glasfaser 18 zurück an das Fluggerät 10 übertragen, und dort von der Sendeeinheit 14 für Funksignale erneut emittiert. Hierdurch können Funknetze mit hoher Netzqualität und hoher Reichweite erreicht werden.

Zum Aufbau des Funknetzes muss eine Bedienperson die Drohne 10 lediglich mit bereits daran angebrachter Kabelanordnung 16 aufsteigen lassen, und in die gewünschte Position steuern. Mit zunehmender Höhe kann die Kabelanordnung 16 beispielsweise von einem Kabelrolle oder Wickelwelle oder Spule abgerollt werden.

Nach Erreichen der gewünschten Flugposition kann eine besondere Einrichtung, die insbesondere Bestandteil der Steuerung 12 ist oder mit dieser kooperiert, dafür sorgen, dass die erreichte Flugposition dauerhaft bewahrt wird, insbesondere durch Messung von Bewegungen und/oder von Beschleunigungen und/oder von Positionen.

Wenn das Fluggerät 10 seine Funktion erfüllt hat, kann dieses durch eine benutzergeführte oder automatische Steuerung wieder an die Bodenfläche 27 herangebracht werden. Gleichzeitig kann die Kabelanordnung 16 eingeholt, z. B. aufgerollt oder aufgewickelt werden.

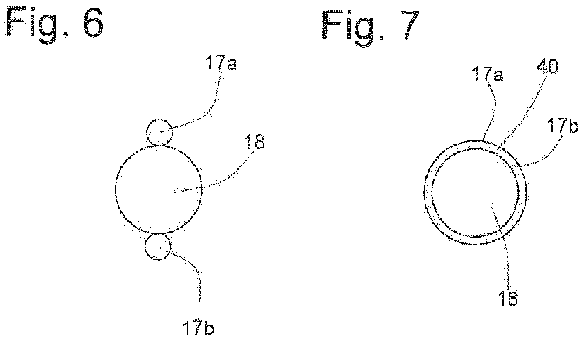

Die Figuren 6 und 7 veranschaulichen lediglich schematisch mögliche konstruktive Ausbildungen der Kabelanordnung 16.

Ausweislich Fig. 6 kann vorgesehen sein, dass die beiden Leiter 17a, 17b voneinander beabstandet an den Außenmantelflächen der Glasfaser 18 angebracht sind. Beispielsweise können diese miteinander verschweißt oder verklebt oder auf eine sonstige Weise an dieser befestigt sein. Die beiden Leiter 17a, 17b können - was Fig. 6 nicht zeigt - vollständig elektrisch isoliert voneinander sein, und beispielsweise mit einer Isolierumhüllung versehen sein.

Ausweislich Fig. 7 kann bei einem Ausführungsbeispiel der Erfindung die Glasfaser 18 von einer mantelartig ausgebildeten ersten Seele 17 umhüllt sein, die wiederum von einer Isolierschicht 40 umhüllt ist, an deren Außenseite eine zweite elektrische Leiterseele 17a angeordnet ist. Andere konstruktive Ausbildungen der Kabelanordnung 16 sind denkbar und von der Erfindung umfasst.

## Patentansprüche

1. Fluggerät (10), umfassend wenigstens einen elektromotorischen Antrieb (11a, 11b) und eine Steuerung (12), mit der das Fluggerät eine eingestellte Flugposition dauerhaft bewahren kann, wobei das Fluggerät über eine Kabelanordnung (16) mit einer Bodenstation (19) verbindbar ist, und wobei die Kabelanordnung wenigstens zwei elektrische Leiter (17a, 17b) zur Bereitstellung einer Spannungsversorgung für den Antrieb umfasst, sowie ein Glasfaserkabel (18) zur Übermittlung von Daten und/oder Signalen.

2. Fluggerät nach Anspruch 1, **dadurch gekennzeichnet, dass** an dem Fluggerät (10) eine Sendeeinheit (14) und/oder eine Empfangseinheit (15) für Funksignale angeordnet ist.

3. Fluggerät nach Anspruch 1 oder 2, **dadurch gekennzeichnet, dass** an dem Fluggerät (10) eine Wandlereinheit (21, 22, 21a, 21b, 22a, 22b) angeordnet ist, die elektronische Signale in optische, auf das Glasfaserkabel (18) aufkoppelbare Signale wandelt und/oder optische, aus dem Glasfaserkabel auskoppelbare Signale in elektrische Signale wandelt.

4. Fluggerät nach einem der vorangegangenen Ansprüche, **dadurch gekennzeichnet, dass** das Fluggerät (10) einen Anschluss (20) aufweist, über den das Glasfaserkabel (18) lösbar anbindbar ist.

5. Fluggerät nach einem der vorangegangenen Ansprüche, **dadurch gekennzeichnet, dass** das Fluggerät (10) über die Kabelanordnung (16) mit der Bodenstation (19) verbunden ist.

6. Fluggerät nach einem der vorangegangenen Ansprüche, **dadurch gekennzeichnet, dass** das Fluggerät (10) nach Art einer Drohne, insbesondere nach Art eines Multicopters, z.B. eines Quadrocopters, ausgebildet ist.

7. Funknetzwerk (45), umfassend wenigstens eine Bodenstation (19), ein über eine Kabelanordnung (16) mit der Bodenstation (19) verbundenes Fluggerät (10) umfassend wenigstens einen elektromotorischen Antrieb (11a, 11b), und ein oder mehrere Funknetzwerk-Teilnehmer (25a, 25b), die Funkdaten empfangen und/oder senden, wobei die Funkdaten von einer an dem Fluggerät (10) angeordneten Sendeeinheit (14) und/oder Empfangseinheit (15) für Funksignale sendbar oder empfangbar sind, und wobei die Kabelanordnung (16) wenigstens zwei elektrische Leiter (17a, 17b) zur Bereitstellung einer Betriebsspannung für den Antrieb (11a, 11b) umfasst, sowie ein Glasfaserkabel (18) zur Übermittlung von Funkdaten und/oder von den Funkdaten entsprechenden Signalen.

8. Funknetzwerk nach Anspruch 7, **dadurch gekennzeichnet, dass** das Funknetzwerk (45) als Intercom-Netzwerk ausgebildet ist.

9. Funknetzwerk nach Anspruch 7 oder 8, **dadurch gekennzeichnet, dass** die Funkdaten Bildinformationen und/oder Audioinformationen umfassen.

10. Verfahren zur Übertragung von Informationen zwischen einem Fluggerät (10) und einer Bodenstation (19), umfassend folgende Schritte:
a) Bereitstellen einer Kabelanordnung (16) zwischen Fluggerät (10) und Bodenstation (19), wobei die Kabelanordnung (16) wenigstens ein Glasfaserkabel (18) aufweist;
b) Bereitstellen von zwei elektrischen Leitern (17a, 17b) als Bestandteil der Kabelanordnung (16);
c) Bereitstellen einer Betriebsspannung für zumindest den Antrieb (11a, 11b) des Fluggerätes (10) an dem Fluggerät über die zumindest zwei elektrischen Leiter;
d) Übermitteln von Informationen zwischen dem Fluggerät (10) und der Bodenstation (19) und/oder zwischen der Bodenstation (19) und dem Fluggerät (10).

11. Verfahren nach Anspruch 10, **dadurch gekennzeichnet, dass** über das Glasfaserkabel (18) eine Daten- und/oder Signalübertragung zwischen der Bodenstation (19) und dem Fluggerät (10) unidirektional oder bidirektional erfolgt.
